# EUROPÄISCHE PATENTSCHRIFT

(11) **EP 1 710 122 B1**
(45) Veröffentlichungstag und Bekanntmachung des Hinweises auf die Patenterteilung: **03.03.2010**
(21) Anmeldenummer: 06007236.0
(22) Anmeldetag: 06.04.2006
(51) Int. Cl.: B60Q 1/076

(54) **Scheinwerfer für Fahrzeuge**
Headlamp for vehicles
Projecteur pour véhicules

(30) Priorität: 07.04.2005 DE 102005015940
(43) Veröffentlichungstag der Anmeldung: 11.10.2006
(73) Patentinhaber: Hella KGaA Hueck & Co., 59552 Lippstadt (DE)
(72) Erfinder: Brummel, Reinhold, 59609 Anröchte (DE); Dikau, Reinhard, 33104 Paderborn (DE); Korff, Detlef, 59557 Lippstadt (DE); Plotzitzka, Jörg, 59558 Lippstadt (DE)

(56) Entgegenhaltungen:
- EP-A- 0 833 099
- EP-A- 1 561 639
- US-A- 4 951 178
- US-B1- 6 478 457
- PATENT ABSTRACTS OF JAPAN Bd. 2000, Nr. 23, 10. Februar 2001 (2001-02-10) -& JP 2001 151011 A (STANLEY ELECTRIC CO LTD), 5. Juni 2001 (2001-06-05)

## Beschreibung

Die Erfindung betrifft einen Scheinwerfer für Fahrzeuge nach dem Oberbegriff des Patenanspruchs 1.

Aus der EP 0 852 190 B1 ist ein Scheinwerfer für Fahrzeuge mit einer Lichteinheit bekannt, die eine Lichtquelle und einen Reflektor umfasst. An einer Rückseite des Reflektors ist ein Verstellelement ansetzbar, so dass der Reflektor um eine senkrecht zur optischen Achse des Scheinwerfers verlaufende Verschwenkachse verschwenkbar ist. Das Verstellelement ist als ein Gelenkstück ausgebildet, das eine Gelenkschale aufweist, in die ein translatorisch verschiebbarer Kugelkopf einer Verstelleinrichtung einrastbar ist. Zur Ermöglichung einer Ausgleichsbewegung des Kugelkopfs in eine Ausgleichsrichtung, die senkrecht zu der Verschwenkachse orientiert ist, weist die Gelenkschale eine zylindrische Innenform in Richtung der Ausgleichsrichtung auf. Nachteilig an dem bekannten Scheinwerfer ist, dass zum Verschwenken des Reflektors ein relativ großer Platzbedarf in Richtung der optischen Achse erforderlich ist.

Aus der DE 103 39 183 A1 ist ein Scheinwerfer für Fahrzeuge mit einer Lichteinheit bekannt, die eine Lichtquelle und einen Reflektor aufweist. Die Lichteinheit ist in einem Verstellrahmen gelagert, der mittels einer Verstelleinrichtung um eine senkrecht zur optischen Achse verlaufende Schwenkachse schwenkbar an einem Tragteil gelagert ist. Die Verstelleinrichtung weist einen an dem Tragteil befestigten Stellmotor auf, der als Verstellelement ein translatorisch und orthogonal zu der Verschwenkachse bewegbares Schiebeelement aufweist, das in einer Nut eines Verbindungsteils des Verstellrahmens gelagert ist. Die Nut des Verbindungsteils erstreckt sich in eine Ausgleichsrichtung, die orthogonal zu der Verstellrichtung und der Verschwenkachse verläuft und damit eine Ausgleichsbewegung des Verstellelementes während der Schwenkbewegung des Verstellrahmens ermöglicht. Nachteilig an dem bekannten Scheinwerfer ist jedoch, dass der Verstellrahmen stets in Lichtaustrittsrichtung hinter dem Tragteil angeordnet sein muss.

Aus der US 6 478 457 B1 ist ein Scheinwerfer für Fahrzeuge mit einer Lichteinheit bekannt. Die Lichteinheit ist an einem Verstellrahmen gelenkig um eine Vertikale Verschwenkachse gelagert. Der Verstellrahmen selbst ist an einem Tragrahmen um eine horizontale Verschwenkachse gelenkig gelagert. An dem Tragrahmen ist eine Verstelleinrichtung befestigt, die ein Verschwenken der Lichteinheit um die vertikale Verschwenkachse ermöglicht. Der Verstellrahmen weist ein Eingriffsteil auf, das in ein Langloch eines quer zur vertikalen Verschwenkachse verschiebbaren Verstellschlittens eingreift. Dadurch, dass das Eingriffsteil in das Langloch eingreift, kann während der Bewegung des Verstellschlittens eine Ausgleichsbewegung des Eingriffsteils in eine orthogonal zu der Verstellrichtung und der Verschwenkachse orientierten Ausgleichsrichtung erfolgen. Der Verstellschlitten ist verschieblich auf einem Tragsteg gelagert, der senkrecht zur vertikalen Verschwenkachse verläuft. Zum Verschwenken des Verstellschlittens entlang des Tragsteges ist ein elektromotorischer Antrieb vorgesehen, der über eine Gewindewelle verfügt, die mit einem Ausleger des Verstellschlittens drehbar verbunden ist.

Aus der nachveröffentlichten EP 1 561 639 A1 ist ein Scheinwerfer für Fahrzeuge mit einer Lichteinheit bekannt, wobei ein mit der Lichteinheit verbundener Verstellrahmen mittels einer Verstelleinrichtung um eine vertikale Verschwenkachse schwenkbar ist. Die Verstelleinrichtung umfasst eine linearbewegliche Schraube, an deren Ende ein Verstellschlitten angeordnet ist, der über ein Langloch verfügt zur Aufnahme eines fest mit dem Verstellrahmen verbundenen Eingriffsteils. Der Verstellrahmen ist in der Ebene eines die Verstelleinrichtung aufnehmenden Tragrahmens angeordnet.

Aufgabe der vorliegenden Erfindung ist es, einen Scheinwerfer für Fahrzeuge derart weiterzubilden, dass Platz sparend und langzeitstabil ein Verschwenken eines die Lichteinheit tragenden Verstellrahmens um eine Verschwenkachse gewährleistet ist.

Zur Lösung dieser Aufgabe weist die Erfindung die Merkmale des Patentanspruchs 1 auf.

Der besondere Vorteil der Erfindung besteht darin, dass durch die Ausführung eines Verstellelementes der Verstelleinrichtung als Verstellschlitten, der mit einem als Eingriffteil ausgebildeten Verbindungsteil des Verstellrahmens zusammenwirkt, eine örtliche Entkopplung zwischen dem Verstellrahmen auf der einen Seite und der Verstelleinrichtung auf der anderen Seite ermöglicht wird. Durch entsprechende Ausbildung des Eingriffsteils kann der Verstellrahmen in Lichtaustrittsrichtung vor, im oder hinter dem Tragteil angeordnet sein. Handelt es sich bei dem Tragteil um einen Tragrahmen, kann das Eingriffsteil eine Strebe des Tragrahmens in Querrichtung kreuzen, ohne dass die Funktionalität des Tragrahmens beeinträchtigt wird. Vorteilhaft kann somit eine flexible und Platz sparende Verschwenkung eines Verstellrahmens erzielt werden. Erfindungsgemäß ist in einer Aufnahme des Verstellschlittens ein Federelement gelagert, das das Eingriffsteil aufnimmt. Dieses Federelement verhindert das Auftreten eines Spiels des Eingriffsteils in der Aufnahme des Verstellschlittens, das durch die ständige wechselnde Relativlage des Eingriffsteils zu den Verstellschlitten während des Verschwenkbetriebes entsteht.

Nach einer Weiterbildung der Erfindung ist ein Verstellschlitten fest auf einem Schiebeelement eines Linearantriebs angeordnet. Das Langloch ist in der Form an die Form des Eingriffsteils angepasst, wobei es sich im Wesentlichen parallel zu der optischen Achse erstreckt. Vorteilhaft ermöglicht der Verstellschlitten eine sichere Führung des Eingriffsteils während der Verschwenkbewegung.

Nach einer Weiterbildung der Erfindung weist das Federelement an mindestens zwei gegenüberliegenden Seiten Federarme auf, so dass es verliersicher und fest in der Aufnahme des Verstellschlittens eingerastet ist.

Nach einer Weiterbildung der Erfindung weist das Tragteil im Bereich des verstellbaren Verstellschlittens eine Aussparung auf, dessen Erstreckung in Verstellrichtung gleich oder größer ist als die Länge des maximalen Verstellweges des Verstellschlittens. Auf diese Weise bilden die Enden der Aussparung bei einem Abstand voneinander, der dem maximalen Verstellweg entspricht, einen Anschlag, so dass auf einfache Weise ein Verschwenkwinkelbereich vorgegeben werden kann.

Vorzugsweise ist in die Aussparung des Tragteils ein benutzerspezifisches Anschlagteil einsetzbar, so dass hierdurch ein maximaler Verschwenkwinkelbereich des Verstellrahmens vorgebbar ist. Vorteilhaft kann hierdurch auf einfache Weise der Verschwenkwinkelbereich des Scheinwerfers verändert werden, ohne dass Komponenten des Scheinwerfers ausgetauscht werden müssten.

Nach einer Weiterbildung der Erfindung ist der Verstellschlitten auf mindestens eine Auflageschiene des Tragteils geführt, so dass von dem Eingriffsteil des Verstellrahmens auf den Verstellschlitten wirkende Querkräfte aufgenommen werden können. Hierdurch ergibt sich eine sichere und langzeitstabile Führung des Verstellschlittens. Der Verstellschlitten bildet quasi ein Gleitstein-Gehäuse, das linear verschiebbar ist und mittels der Aufnahme quasi ein Lineargelenk bildet.

Ausführungsbeispiele der Erfindung werden nachfolgend anhand der Zeichnungen näher erläutert.

Es zeigen:
- Figur 1a: eine Draufsicht auf einen Scheinwerfer in einer ersten Schwenkstellung eines die Lichteinheit des Scheinwerfers tragenden Verstellrahmens,
- Figur 1b: eine Draufsicht auf eine zweite Schwenkstellung des Verstellrahmens nach Figur 1a,
- Figur 1c: eine schematische Draufsicht auf die Ausgleichsbewegung eines in einer Aufnahme eines Tragteils gelagerten Eingriffsteils des Verstellrahmens,
- Figur 2a: eine perspektivische Darstellung des Verstellrahmens mit dem Eingriffsteil und einem demselben zugeordneten Federelement,
- Figur 2b: eine perspektivische Darstellung des Verstellrahmens mit dem Federelement und einem Verstellschlitten einer Verstelleinrichtung,
- Figur 2c: eine perspektivische Darstellung des Verstellrahmens, der mit dem Eingriffsteils über das Federelement in der Aufnahme des Verstellschlittens eingreift,
- Figur 3: eine perspektivische Rückansicht des Scheinwerfers, wobei das Tragteil als Tragrahmen ausgebildet mit einer Aussparung, so dass der Verstellschlitten mit dem Eingriffteil in eine vorgegebene Arbeitsposition verfahrbar ist, und
- Figur 4: eine perspektivische Rückansicht eines Scheinwerfers, wobei der Aussparung des Tragrahmens ein Anschlagteil zugeordnet ist zur Begrenzung des Verschwenkwinkels.

Ein Scheinwerfer für Fahrzeuge weist zum einen einen Verstellrahmen 1 auf, an dem in bekannter Weise eine nicht dargestellte Lichteinheit mit einer Lichtquelle und einem Reflektor befestigt ist, und ein Tragteil 2, das im vorliegenden Ausführungsbeispiel als Tragrahmen ausgebildet ist, der an einem Gehäuse schwenkbar um eine horizontale Achse gelagert ist.

Der Verstellrahmen 1 ist in Lichtaustrittsrichtung 3 vor dem Tragrahmen 2 angeordnet und über Lagerbuchsen 4 schwenkbar um eine Vertikalachse V an dem Tragrahmen 2 gelagert.

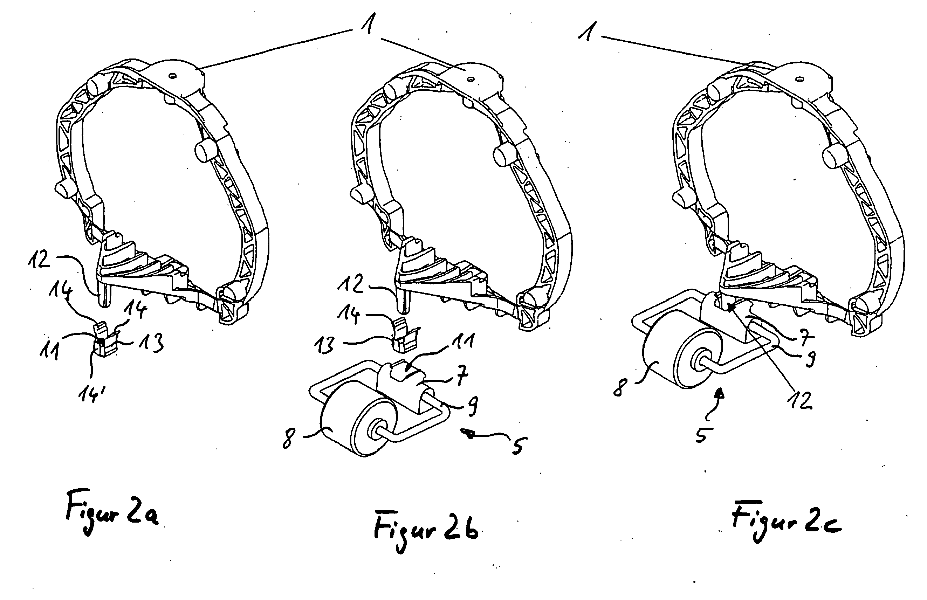

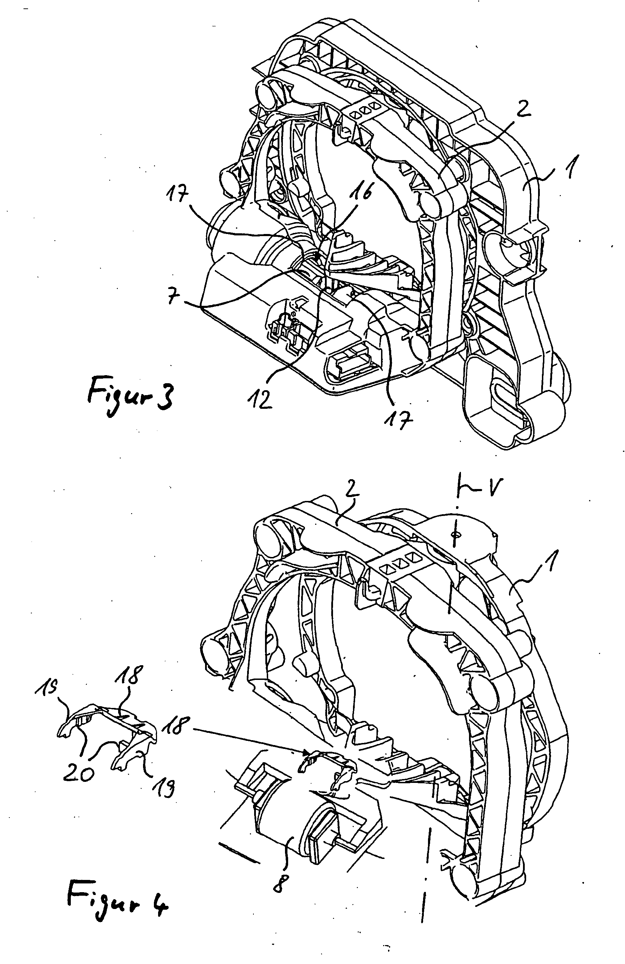

Zur Bildung eines Kurvenlichtes ist der Verstellrahmen 1 mit einer Verstelleinrichtung 5 gekoppelt, die ein quer zu einer optischen Achse 6 des Scheinwerfers bzw. der Lichtaustrittsrichtung 3 verschiebbares Verstellelement 7 aufweist. Das Verstellelement 7 ist als ein Verstellschlitten ausgebildet, der orthogonal zur optischen Achse 6 und orthogonal zu der Verschwenkachse V verschiebbar gelagert ist. In den Figuren 2b, 2c und 4 ist schematisch ein Linearantrieb 8 dargestellt, der den Verstellschlitten 7 mittels eines Schiebeelementes 9 in Verstellrichtung 10 bewegt. Der Linearantrieb 8 ist vorzugsweise als ein Schrittmotor ausgebildet, der - wie aus Figur 3 zu ersehen ist - auf einer der optischen Achse 6 abgewandten Seite des Tragrahmens 2 an demselben befestigt ist.

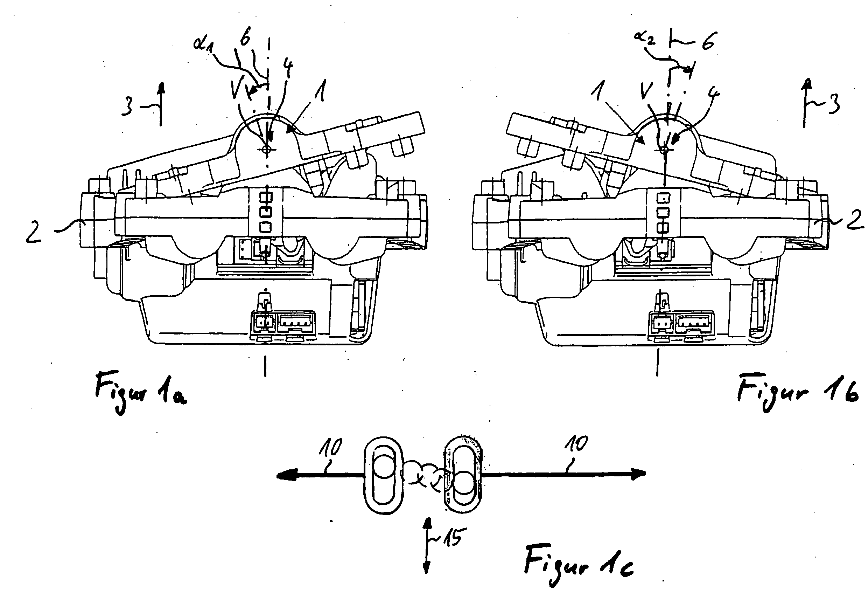

Der Verstellschlitten 7 weist eine Aufnahme 11 auf, in die ein als Eingriffsteil ausgebildetes Verbindungsteil 12 des Verstellrahmens 1 eingreifbar ist. Vorzugsweise ist das Eingriffsteil 12 über ein Federelement 13 in der Aufnahme 11 des Verstellschlittens 7 gelagert, wobei das Federelement 13 zwei in Verstellrichtung 10 zueinander beabstandete Federarme 14 aufweist, die zur Führung des Eingriffsteils 12 beim Einsetzen in das Federelement 13 dienen. Ferner weist das Federelement 13 zwei quer zur Verstellrichtung 10 zueinander beabstandete Federarme 14' auf, mittels derer das Federelement 13 in der Aufnahme 11 eingerastet ist und deren Abstand zueinander so an den Durchmesser des Eingriffsteils 12 angepasst ist, dass das Eingriffsteil 12 in Verstellrichtung ohne Spiel gelagert ist. Quer zur Verstellrichtung 10, das heißt orthogonal zu der Verstellrichtung 10 und der Verschwenkachse V, ist die Erstreckung der Aufnahme 11 größer als die entsprechend gerichtete Erstreckung des Eingriffsteils 12, so dass während der Bewegung des Eingriffsteils 12 aus einer ersten Verschwenkstellung gemäß Figur 1a in eine zweite Verschwenkrichtung gemäß Figur 1b das Eingriffsteil 12 eine Ausgleichsbewegung in Ausgleichsrichtung 15 ausführen kann. Zu diesem Zweck ist die Aufnahme 11 bzw. die durch das Federelement 13 gebildete Aufnahme als Langloch ausgebildet, dessen Erstreckung quer zur Verstellrichtung 10 größer ist als in Verstellrichtung 10. Das Langloch bildet somit eine Öffnung, in die das Eingriffsteil 12 einsetzbar ist und in der es in Verstellrichtung 10 ohne Spiel und quer zur Verstellrichtung 10 mit Spiel zur Bildung der Ausgleichsbewegung gelagert ist.

Wie aus Figur 3 zu ersehen ist, weist der Tragrahmen 2 im Bereich des verstellbaren Verstellschlittens 7 eine Aussparung 16 auf, deren Erstreckung in Verstellrichtung 10 größer ist als die Aufnahme 11 des Verstellschlittens 7 und die Länge des Verstellweges in Verstellrichtung 10 vorgibt. Der stirnseitige Rand 17 der Aussparung 16 bildet somit einen Anschlag für den maximalen Verstellwinkel α₁ in der einen und α₂ in der anderen Richtung.

In einer weiteren Ausführungsform der Erfindung gemäß Figur 4 kann in die Aussparung 16 des Tragrahmens 2 ein benutzerspezifisches Anschlagteil 18 eingesetzt werden zur Vorgabe des maximalen Verschwenkwinkels α₁, α₂ des Verstellrahmens 1. Das Anschlagteil 18 ist U-förmig ausgebildet und weist gegenüberliegende Anschlagschenkel 19 auf, die klemmend an den stirnseitigen Rändern 17 der Aussparung 16 anliegen. Von den Anschlagschenkeln 19 erstrecken sich auf einer zueinander gekehrten Seite Anschlagnasen 20, gegen die der Verstellschlitten in der Endstellung desselben, die den maximalen Verstellwinkel α₁, α₂ vorgibt, anliegt. Auf diese Weise können benutzerspezifisch unterschiedliche maximale Verstellwinkel α₁, α₂ eingestellt werden, ohne dass die Bauteile des Scheinwerfers verändert werden müssten.

Zur verbesserten Führung des Verstellschlittens 7 während der Bewegung in Verstellrichtung 10 weist der Verstellschlitten 7 an zumindest einer Randseite, die sich in Verstellrichtung 10 erstreckt, einen Absatz auf, der auf einer nicht dargestellten Auflageschiene des Tragrahmens 2 geführt ist. Hierdurch ergibt sich eine gesicherte Führung des Verstellschlittens 7 in Verstellrichtung 10.

Der Verstellrahmen 1 und der Tragrahmen 2 sind vorzugsweise aus einem Kunststoffmaterial hergestellt. Das Eingriffsteil 12 des Verstellrahmens 1 und der Verstellschlitten 7 sind in der Ebene des Tragrahmens 2 bzw. in Lichtaustrittsrichtung 3 hinter der Erstreckungsebene des Tragrahmens 2 angeordnet.

## Patentansprüche

1. Scheinwerfer für Fahrzeuge mit einer Lichteinheit enthaltend eine Lichtquelle und einen Reflektor, wobei die Lichteinheit in einem Verstellrahmen (1) gelagert ist, der mittels einer Verstelleinrichtung (5) um eine senkrecht zur optischen Achse (6) verlaufende Verschwenkachse (V) schwenkbar an einem Tragteil (2) gelagert ist, wobei die Verstelleinrichtung (5) ein entlang einer quer zur optischen Achse (6) verlaufenden Verstellrichtung (10) verschiebbares Verstellelement (7) aufweist, das mit einem Verbindungsteil (12) des Verstellrahmens (1) derart zusammenwirkt, dass das Verbindungsteil (12) während der Bewegung des Verstellelementes (7) in Verstellrichtung (10) eine Ausgleichsbewegung in einer Ausgleichsrichtung (15) ausübt, die orthogonal zu der Verstellrichtung (10) und der Verschwenkachse (V) ist, dass das Verbindungsteil (12) als ein Eingriffsteil und dass das Verstellelement (7) als ein Verstellschlitten ausgebildet sind, wobei der Verstellschlitten (7) eine Aufnahme (11) mit einem Langloch aufweist, in das das Eingriffsteil (12) eingreift, **dadurch gekennzeichnet, dass** das Eingriffsteil (12) über ein Federelement (13) in der Aufnahme (11) des Verstellschlittens (7) gelagert ist und dass der Verstellrahmen (1) in Lichtaustrittsrichtung (3) vor oder hinter dem als Tragrahmen (2) ausgebildeten Tragteil angeordnet ist.

2. Scheinwerfer nach Anspruch 1, **dadurch gekennzeichnet, dass** der Verstellschlitten (7) linear geführt ist.

3. Scheinwerfer nach Anspruch 1 oder 2, **dadurch gekennzeichnet, dass** der Verstellschlitten (7) fest auf einem Schiebeelement (9) eines Linearantriebs (8) angeordnet ist.

4. Scheinwerfer nach einem der Ansprüche 1 bis 3, **dadurch gekennzeichnet, dass** der Linearantrieb (8) als ein Schrittmotor ausgebildet ist, der auf einer der optischen Achse (6) abgewandten Seite an dem Tragteil (2) befestigt ist.

5. Scheinwerfer nach einem der Ansprüche 1 bis 4, **dadurch gekennzeichnet, dass** das Federelement (13) an mindestens zwei gegenüberliegenden Seiten Federarme (14) aufweist und dass das Federelement (13) in der Aufnahme (11) des Verstellschlittens (7) durch Einrastung befestigt ist.

6. Scheinwerfer nach einem der Ansprüche 1 bis 5, **dadurch gekennzeichnet, dass** das Tragteil (2) im Bereich des verstellbaren Verstellschlittens (7) eine Aussparung (16) aufweist, die größer ist als die Aufnahme (11) des Verstellschlittens (7) und die in Erstreckung der Verstellrichtung den maximalen Verstellweg des Verstellschlittens (7) bzw. den maximalen Verstellwinkel (α₁, α₂) des Verstellrahmens (1) vorgibt.

7. Scheinwerfer nach einem der Ansprüche 1 bis 6, **dadurch gekennzeichnet, dass** in die Aussparung (16) des Tragteils (2) ein benutzerspezifisches Anschlagteil (18) einsetzbar ist zur Vorgabe eines maximalen Verschwenkwinkels (α₁, α₂) des Verstellrahmens (1).

8. Scheinwerfer nach Anspruch 7, **dadurch gekennzeichnet, dass** das Anschlagteil (18) durch Verrasten in der Aussparung (16) des Tragteils (2) gehalten ist.

9. Scheinwerfer nach einem der Ansprüche 1 bis 8, **dadurch gekennzeichnet, dass** der Verstellschlitten (7) auf mindestens einer Auflageschiene des Tragteils (2) geführt ist.

## Claims

1. Headlamp for vehicles containing a light unit comprising a light source and a reflector, wherein the light unit is mounted on an adjustment frame (1) which is attached to a holding element (2) by means of an adjustment mechanism (5) able to pivot the adjustment frame (1) around a pivot axis (V) cutting vertically across the optical axis (6), wherein the adjustment mechanism (5) holds an adjustment element (7) which moves along an adjustment direction (10) cutting transversely across the optical axis (6) and which interacts with a connecting element (12) of the adjustment frame (1) such that the connecting element (12), as the adjustment element (7) moves in adjustment direction (10), performs a compensating movement in a compensation direction (15) cutting orthogonally across the adjustment direction (10) and the pivot axis (V), wherein the connecting element (12) is a protruding part and the adjustment element (7) is a sliding element shaped like an adapter (11) with an oblong hole that the protruding part (12) slots into, **characterized in that** the protruding part (12) is held in the adapter (11) of the sliding element (7) by a spring element (13) and **in that** the adjustment frame (1), in the direction of light exit (3), is mounted before or after the holding element designed as a holding frame (2).

2. Headlamp of claim 1, **characterized in that** the sliding element (7) performs a linear movement.

3. Headlamp of claim 1 or 2, **characterized in that** the sliding element (7) is permanently attached to a pushing element (9) of a linear actuator (8).

4. Headlamp of claims 1 to 3, **characterized in that** the linear actuator (8) is designed as a stepper motor mounted on a side of the holding element (2) facing away from the optical axis (6).

5. Headlamp of claims 1 to 4, **characterized in that** the spring element (13) has spring arms (14) on at least two opposite sides and **in that** the spring element (13) snaps in to the adapter (11) of the sliding element (7).

6. Headlamp of claims 1 to 5, **characterized in that** the holding element (2) has a recess (16) around the adjustable sliding element (7) such that the recess (16) is larger than the adapter (11) of the sliding element (7) and such that, in adjustment direction, the recess (16) sets a maximum limit to the adjustment range of the sliding element (7) and/or the maximum adjustment angle (α1, α2) of the adjustment frame (1).

7. Headlamp of claims 1 to 6, **characterized in that** a user-specific limit stop (18) can be placed in the recess (16) of the holding element (2) such that the limit stop (18) sets a maximum limit to the pivot angle (α1, α2) of the adjustment frame (1).

8. Headlamp of claim 7, **characterized in that** the limit stop (18) snaps in to the recess (16) of the holding element (2).

9. Headlamp of claims 1 to 8, **characterized in that** the sliding element (7) moves on at least one resting rail of the holding element (2).

## Revendications

1. Projecteur pour véhicules avec une unité d'éclairage comprenant une source d'éclairage et un réflecteur, l'unité d'éclairage étant logée dans un châssis réglable (1), lequel se trouve lui-même sur un élément support (2) de manière orientable à l'aide d'un dispositif de réglage (5) autour d'un axe de pivotement (V) perpendiculaire à l'axe optique (6), le dispositif de réglage (5) présentant un élément de réglage (7) pouvant être repoussé le long d'un sens de réglage (10) perpendiculaire à l'axe optique (6), lequel élément de réglage agit avec un élément de liaison (12) du châssis réglable (1) de manière que l'élément de liaison (12), pendant le mouvement de l'élément de réglage (7), dans le sens de réglage (10), exerce un mouvement de compensation dans un sens de compensation (15) orthogonal par rapport au sens de réglage (10) et à l'axe de pivotement (V), que l'élément de liaison (12) est formé en tant qu'élément de prise et que l'élément de réglage (7) est formé en tant que chariot de réglage, le chariot de réglage (7) présentant un logement (11) avec un trou oblong dans lequel l'élément de prise (12) entre en prise, **caractérisé en ce que** l'élément de prise (12) est logé via un élément ressort (13) dans le logement (11) du chariot de réglage (7) et que le châssis de réglage (1) dans le sens de sortie de l'éclairage (3) est disposé en amont ou en aval de l'élément support formé en tant que châssis support (2).

2. Projecteur selon la revendication 1, **caractérisé en ce que** le chariot de réglage (7) est guidé de manière linéaire.

3. Projecteur selon la revendication 1 ou 2, **caractérisé en ce que** le chariot de réglage (7) est disposé de manière fixe sur un élément coulissant (9) d'un entraînement linéaire (8).

4. Projecteur selon l'une des revendications 1 à 3, **caractérisé en ce que** l'entraînement linéaire (8) consiste en un moteur pas à pas qui est fixé sur l'élément support (2) sur une face détournée de l'axe (6) optique.

5. Projecteur selon l'une des revendications 1 à 4, **caractérisé en ce que** l'élément ressort (13) présente des bras ressorts (14) sur au moins deux faces opposées et que l'élément ressort (13) est fixé par encliquetage dans le logement (11) du chariot de réglage (7).

6. Projecteur selon l'une des revendications 1 à 5, **caractérisé en ce que** l'élément porteur (2) dans la zone du chariot de réglage (7) réglable présente un évidement (16) qui est plus grand que le logement (11) du chariot de réglage (7) et qui, dans l'allongement du sens de réglage, donne la course de réglage maximale du chariot de réglage (7) ou l'angle de réglage maximal (α₁, α₂) du châssis de réglage (1).

7. Projecteur selon l'une des revendications 1 à 6, **caractérisé en ce qu'**un élément de butée (18) spécifique à l'utilisateur est utilisé dans l'évidement (16) de l'élément support (2) pour la spécification d'un angle de pivotement (α₁, α₂) maximal du châssis de réglage (1).

8. Projecteur selon la revendication 7, **caractérisé en ce que** l'élément de butée (18) est maintenu par encliquetage dans l'évidement (16) de l'élément support (2).

9. Projecteur selon l'une des revendications 1 à 8, **caractérisé en ce que** le chariot de réglage (7) est guidé au moins sur un rail d'appui de l'élément support (2).
